# EUROPÄISCHE PATENTSCHRIFT

(11) **EP 0 429 005 B1**
(45) Veröffentlichungstag und Bekanntmachung des Hinweises auf die Patenterteilung: **22.05.1996**
(21) Anmeldenummer: 90121865.1
(22) Anmeldetag: 15.11.1990
(51) Int. Cl.: G02B 21/00, G02B 21/36

(54) **Mikroskop mit einem diagonal verlaufenden Beobachtungsstrahlengang**
Microscope with a diagonal observation light path
Microscope avec trajectoire d'observation diagonale

(30) Priorität: 18.11.1989 DE 3938412
(43) Veröffentlichungstag der Anmeldung: 29.05.1991
(73) Patentinhaber: Firma Carl Zeiss, D-73446 Oberkochen (DE); CARL ZEISS-STIFTUNG HANDELND ALS CARL ZEISS, D-89518 Heidenheim (Brenz) (DE)
(72) Erfinder: Meyer, Manfred, W-7920 Heidenheim (DE)

(56) Entgegenhaltungen:
- DE-A- 3 744 156
- FR-A- 2 528 989
- US-A- 4 440 475
- US-A- 4 770 520

## Beschreibung

Inverse Mikroskope lassen sich hinsichtlich der Führung des Beobachtungsstrahlenganges in zwei Typen einteilen:

Einmal in Geräte, deren Strahlengang durch Reflektoren mehrfach rechtwinklig umgelenkt ist und schließlich wie bei aufrechten Mikroskopen senkrecht nach oben verläuft. Zur Ausspiegelung in den Binokulartubus dient dann ein in der Regel ein 30°-Umlenkprisma, an dessen Prismenflächen der Beobachtungsstrahlengang unter dem Winkel für innere Totalreflexion gespiegelt wird.

Geräte mit diesen Aufbau sind beispielsweise in der DE-PS 26 40 974 und der US-PS 46 85 776 beschrieben.

Oft ist das beschriebene Prisma auch durch einen Strahlteiler in Form eines zur einer Planplatte ergänzten Prismas ersetzt, bzw. hiergegen mit Hilfe eines Schiebers oder eines Revolvers wechselbar, so daß Zusatzgeräte wie z.B. eine Aufsetzkamera oder eine TV-Kamera angeschlossen werden können. Der Strahlengang für die z.B. Aufsetzkamera tritt dann geradlinig durch dieses Teilerprisma hindurch.

Die vorstehend beschriebenen Geräte sind relativ aufwendig, da der Beobachtungsstrahlengang in der Regel durch mindestens fünf Reflexionen umgelenkt ist, und zwar auch dann, wenn das Gerät in einer preiswerten Ausführungsform überhaupt keine Bildausgänge für Zusatzgeräte besitzt.

Neben den Geräten des vorstehend beschriebenen Typs sind auch inverse Mikroskope bekannt, deren Beobachtungsstrahlengang diagonal nach oben in Richtung auf den Betrachter verläuft, und zwar unter einem Winkel von etwa 45°, parallel zu dem

Winkel des angesetzten Binokulartubus. Diese Geräte besitzen zwar hinsichtlich des Beobachtungsstrahlenganges einen einfachen und preisgünstigen Aufbau, da nur eine einzige Umlenkung, nämlich die in den diagonal nach oben gerichteten Strahlengang erforderlich ist. Es ist jedoch schwierig, bei Geräten dieses zweiten Typs eine Aufsetzkamera anzubringen, da einmal zwischen Binokulartubus und Mikroskoptisch wenig Platz vorhanden ist und zum anderen die Ausspiegelung des zusätzlichen Strahlenganges aus dem unter 45° verlaufenden Beobachtungsstrahlengang in die Vertikale Schwierigkeiten bereitet.

Diese Schwierigkeiten verstärken sich noch zusätzlich, wenn der die Aufsatzkamera und den Binokulartubus aufnehmende Teil des Mikroskops als Wechseltubus ausgebildet werden soll.

In der Regel werden aber Bildausgänge mit senkrecht ausgrichteter optischer Achse aus Stabilitätsgründen bevorzugt, da sich dann das Gewicht des Zusatzteiles auf dem Gehäuse des Mikroskops in Achsrichtung abstützen kann.

Aus der US-A 4 440 475 ist ein Mikroskop bekannt, bei dem der Beobachtungsstrahlengang diagonal nach oben in Richtung auf den Betrachter verläuft und im Beobachtungsstrahlengang ein drehbarer Spiegel angeordnet ist, durch den das Licht des Beobachtungsstrahlenganges in einen vertikal verlaufenden Strahlengang für eine Kamera gelenkt werden kann. Bei diesem Mikroskop ist eine visuelle Beobachtung und eine Einspiegelung in den Photostrahlengang simultan nicht ohneweiteres möglich.

Aus der US 3 574 295 ist desweiteren ein Stereomikroskop bekannt, in dem ein rotierendes Prisma die stereoskopischen Teilstrahlengänge alternierend in einen Photostrahlengang lenkt. Je nach Stellung des Prismas tritt ein Beobachtungsstrahlengang in Richtung auf die Okulare gradlinig durch das Prisma hindurch, während der Photostrahlengang nach Reflexion an der Teilerfläche und einer weiteren Reflexion senkrecht nach oben gelenkt ist. Bei diesem Stereomikroskop verlaufen jedoch die Beobachtungsstrahlengänge im Bereich des Prismas nicht in Richtung auf den Betrachter.

Es ist die Aufgabe der vorliegenden Erfindung, für ein Mikroskop mit einem diagonal in Richtung auf den Betrachter verlaufenden Beobachtungstrahlengang eine möglichst einfache Form der Ausspiegelung eines Teils des Beobachtungsstrahlenganges in einen vertikal gerichteten Strahlengang für Zusatzgeräte vorzusehen, wobei auf einfache Weise auch Varianten ohne solche Ausspiegelung möglich sein sollen.

Diese Aufgabe wird durch die in den Ansprüchen 1 und 11 angegebenen Maßnahmen gelöst. Weitere vorteilhafte Ausgestaltungen ergeben sich aus den Merkmalen der abhängigen Ansprüche.

Gemäß der Erfindung ist also für die Ausspiegelung des Zusatzstrahlenganges in die vertikale Richtung ein Strahlteiler vorgesehen, durch den der Beobachtungsstrahlengang geradlinig hindurchtritt. Für den Beobachtungsstrahlengang sind deshalb keine weiteren, die Bildqualität verschlechternden Reflexionsflächen vorgesehen. Für die Optik im Bereich der Aufspiegelung eines Teils des Beobachtungsstrahlenganges läßt sich ein kompakter Aufbau dadurch erzielen, daß der Strahlteiler ein Prisma ist, das die weitere Reflexion in den Zusatzstrahlengang durch innere Totalreflexion an der Lichteintrittsfläche des Prismas bewirkt.

Der Strahlteiler befindet sich zweckmäßig in Lichtrichtung gesehen hinter der Tubuslinse, da dann nur eine gemeinsame Tubuslinse zur Erzeugung des Zwischenbildes im Okulartubus und im zusätzlichen Bildausgang erforderlich ist.

Damit auch Strahlengänge mit einem ausreichend großen Öffnungswinkel von bis zu 9° aus dem vorzugsweise unter 45° gegen die Vertikale geneigten Beobachtungsstrahlengang in die Vertikale durch innere Totalreflexion an der Basisfläche des Prismas abgelenkt werden können, besteht dieses Prisma zweckmäßigerweise aus Glas mit einem Brechungsindex von wenigstens 1,55.

Die erfindungsgemäßen Maßnahmen sind insbesondere für ein Mikroskop geeignet, bei dem der Ansatz für den Binokulartubus und der vertikale Bildausgang für ein Zusatzgerät zu einem Wechseltubus zusammengefaßt sind, der den Strahlteiler und die Tubuslinse des Mikroskops enthält. Es ist dann möglich, für eine vereinfachte, preiswerte Geräteversion einen zweiten Wechseltubus vorzusehen, der nur den Ansatz für den Binokulartubus ohne den zweiten Bildausgang enthält und der außer der Tubuslinse keine weitere Optik enthält. Die unterschiedlichen Bildlagen in den beiden Wechseltuben können durch ein Verschieben der Tubuslinse ausgeglichen werden.

Es ist jedoch auch möglich, einen etwas aufwendigeren Wechseltubus vorzusehen, der zusätzlich zu dem vertikalen Bildausgang für Zusatzgeräte noch einen dritten, horizontalen Bildausgang aufweist. In einer solchen Geräteversion sind dann zwei Strahlteiler vorzusehen, die alternativ in den Strahlengang einschaltbar sind.

Da die Tubuslinse dem Wechseltubus zugeordnet ist, lassen sich außerdem die Bildlagen in den Okularen und dem zusätzlichen Bildausgang einfach abgleichen und sind unempfindlich gegen Fertigungstoleranzen im Bereich der Wechselfläche.

Weitere Vorteile der Erfindung ergeben sich aus der nachfolgenden Beschreibung eines Ausführungsbeispieles anhand der Figuren 1-3 der beigefügten Zeichnungen.
- Figur 1: ist eine Schnittzeichnung eines inversen Mikroskops in einer vertikalen Ebene und zeigt den optischen und mechanischen Aufbau des Gerätes;
- Figur 2: ist eine Skizze, die eine alternative Ausführungsform für den Tubus (8) in Figur 1 darstellt;
- Figur 3: ist eine Schnittzeichnung eines gegen den Tubus (8) in Figur 1 wechselbaren Tubus für eine Beobachtung.
- Figur 4: ist eine Schnittzeichnung eines weiteren gegen den Tubus (8) in Figur 1 wechselbaren Tubus in einer zur Figur 1 senkrechten und den Beobachtungsstrahlengang enthaltenden Ebene.

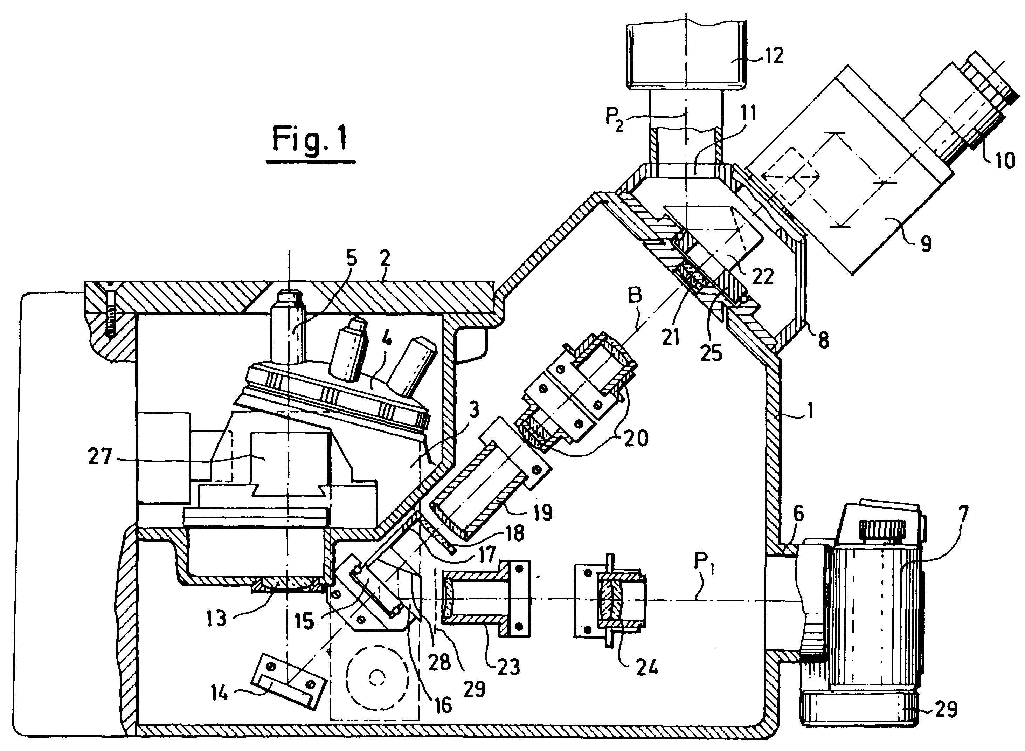

Das in Figur 1 dargestellte Mikroskop besitzt ein geschlossenes, im wesentlichen U-förmiges Gehäuse (1), auf dem ein Präparattisch (2) so befestigt ist, daß er die beiden U-förmigen Schenkel des Gehäuses verbindet. Im Ausbruch zwischen den U-förmigen Schenkeln ist der vertikal verschiebbare Trager (3) für einen fokussierbaren Objektivrevolver (4) gelagert. In der Darstellung nach Figur 1 befindet sich das Objektiv (5) in Arbeitsteilung.

In dem vertikal nach unten verlaufenden Strahlengang in Lichtrichtung hinter dem Objektiv (5) folgt auf einen nicht näher dargestellten Auflichtreflektorschieber (27) zur Einspiegelung des Beleuchtungsstrahlenganges die Tubuslinse (13) des Mikroskops, die in Verbindung mit den auf Schnittweite unendlich korrigierten Objektiven ein erstes Zwischenbild erzeugt. Dieses Zwischenbild entsteht an der Stelle, an der sich die nachher noch beschriebene Formatstrichplatte (18) befindet.

Auf die Tubuslinse (13) folgt unmittelbar ein Reflektor (14), der den Beobachtungsstrahlengang unter einem Winkel von ca. 45° diagonal nach oben in Richtung auf den Betrachter umlenkt. Im bereits aufwärts gerichteten Beobachtungsstrahlengang zwischen dem Reflektor (14) und der Zwischenbildebene ist ein Teilerprisma (16) angeordnet, das den zu einer Kamera (7) am Photoausgang (6) an der Frontseite des Gerätes verlaufenden, mit P1 bezeichneten Photostrahlengang von dem Beobachtungsstrahlengang B trennt. Hierbei wird der Photostrahlengang nach Reflexion an der Teilerfläche (28) des Prismas (16) nochmals an der Lichteintrittsfläche des Prismas (16) durch innere Totalreflexion umgelenkt und verläuft danach waagerecht. Das auch im Photostrahlengang entstehende Zwischenbild (29) wird mittels einer Feldoptik (23) und einer darauffolgenden Abbildungsoptik (24) in die Bildebene des Kameragehäuses (7) abgebildet.

Das Strahlteilerprisma (16) ist im aufwärts verlaufenden Strahlengang soweit vom Reflektor (14) weg nach oben verlegt, daß der Photostrahlengang genügend Bodenfreiheit besitzt, um unter das Kameragehäuse (7) auch noch ein Winder-Gehäuse (29) anzusetzen.

Das Prisma (16) ist auf einem Schieber (15) befestigt, der mehrere Schaltstellungen besitzt. Während das Teilerprisma (16) eine Strahlteilung im Verhältnis von z.B. 50:50 zwischen Beobachtungsstrahlengang und Photostrahlengang bewirkt, ist in einer der Schaltstellungen das Strahlteilerprisma (16) durch eine entsprechend dicke Glasplatte ersetzt, die alles Licht in den Beobachtungsstralengang gelangen läßt. Auf weiteren Schaltplätzen des Schiebers (15) können Strahlteilerprismen mit anderen Teilerfaktoren oder ein Spiegel angeordnet werden, der alles Licht in den Photostrahlengang reflektiert.

Da die Basisfläche des Prismas (16) ) die den Photostrahlengang umlenkt, gleichzeitig als Lichteintrittsfläche dient und somit eine Verspiegelung nicht erfolgen kann, ist durch eine geeignete Auswahl des Prismenmaterials gewährleistet, daß auch für Öffnungswinkel von 9° der Grenzwinkel für Totalreflexion an der Prismenfläche nicht unterschritten wird. Hierfür ist erforderlich, daß das Glas mindestens eine Brechzahl von 1,55 besitzt. Im konkreten Ausführungsbeispiel wurde für das Prisma das Glas BAK4 mit einer Brechzahl von n (d) = 1,57 gewählt. Dort ergibt sich der Grenzwinkel für die Totalreflexion zu 39,6°, so daß für die beschriebene 45°-Umlenkung aus dem Beobachtungsstrahlengang in den Photostrahlengang der volle Öffnungswinkel sogar mehr als 10° betragen kann.

Am Schieber (15) ist über einen Verbindungsarm (17) gleichzeitig die Fassung für eine Formatstrichplatte (18) befestigt. Diese Formatstrichplatte (18) befindet sich in der von der Tubuslinse (13) erzeugten Zwischenbildebene im Beobachtungsstrahlengang. Die Strichplatte trägt außerdem noch eine Fokussierhilfe (30)) mit deren Hilfe sichergestellt werden kann, daß die Objektebene scharf in die Filmebene der Kamera (7) abgebildet wird. Die Strichtplatte (18) ist über den Verbindungsarm (17) bewegungsmäßig mit dem Prisma (16) gekoppelt und deshalb nur bei eingeschaltetem Photostrahlengang im Beobachtungsstrahlengang sichtbar.

Im Strahlengang hinter der Strichplatte (18) folgt in Lichtrichtung gesehen wieder eine Feldoptik (19) sowie eine weitere Optik (20)) die einen telezentrischen Strahlengang erzeugt.

Auf die im oberen Teil geneigte Stirnfläche des Gehäuses (1) des Mikroskops ist ein abnehmbarer Wechseltubus (8) gesetzt. Dieser Wechseltubus (8) ist mit einer Aufnahmeschwalbe an das Gehäuse (1) adaptiert, trägt den Binokulartubus (9) des Mikroskops und besitzt außerdem einen weiteren Ausgang (11) für Zusatzgeräte wie die in Figur 1 teilweise sichtbare Fernsehkamera (12). Der mit (P2) bezeichnete Strahlengang für dieses Zusatzgerät ist aus dem Beobachtungsstrahlengang (B) in die Vertikale ausgespiegelt. Hierzu ist im Tubus (8) hinter der Tubuslinse (21), die das Zwischenbild in den Okularen (10) des Okulartubus erzeugt, ein weiteres Strahlteilerprisma (22) angeordnet. Durch dieses Prisma (22) tritt der Beobachtungsstrahlengang geradlinig hindurch, während der zur Kamera (12) führende Strahlengang an der Teilerfläche und der Basisfläche des Prismas je einmal reflektiert wird. Das Prisma (22) besitzt den gleichen Aufbau wie das Prisma (16) und ist ebenfalls auf einem Schieber (25) aufgenommen, mit dem auf freien Durchgang in den Binokulartubus (9) geschaltet werden kann.

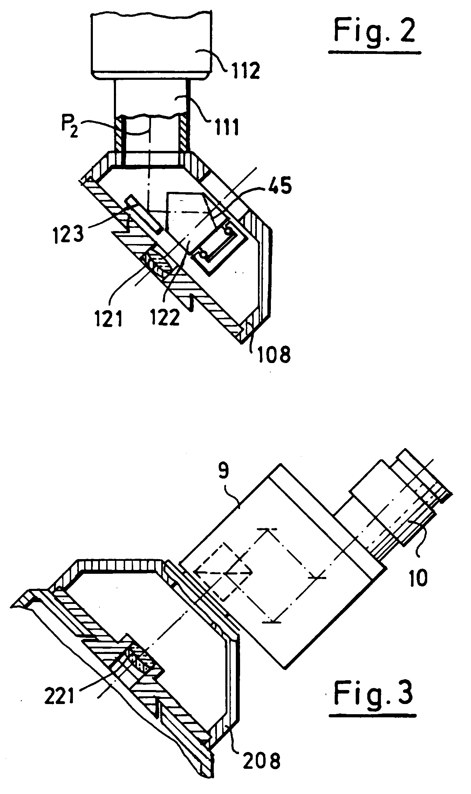

Es ist nicht unbedingt erforderlich, die Prismen (16) bzw. (22) der dargestellten Form auszubilden. Vielmehr ist es auch möglich, für die auf die Teilerfläche folgende Strahlumlenkung einen separaten Spiegel (123) vorzusehen, wie das in dem alternativen Ausführungsbeispiel für einen Wechseltubus (108) nach Figur 2 dargestellt ist. Im Material für das Strahlteilerprisma (122) ist man dann nicht auf höherbrechende Gläser eingeschränkt, da das Prisma (122) allein die Strahlteilung bewirkt und eintretender und austretender Strahl ausreichend voneinander separiert sind.

Der Tubus (8) in Figur 1 bzw. (118) in Figur 2 kann gegen den in Figur 3 dargestellten Tubus (208) ausgewechselt werden. In der so vereinfachten Geräteversion entfällt der vertikale Zusatzstrahlengang (P2) und es ist allein der Binokulartubus (9) mit dem Okular (10) an den Wechseltubus (208) angeschlossen. Der Wechseltubus (108) enthält neben der Tubuslinse (221) überhaupt keine weitere Optik. Zum Ausgleich der durch das fehlende Prisma größeren optischen Weglänge zwischen der Tubuslinse (221) und der Zwischenbildebene im Okular (10) ist die Tubuslinse (221) verglichen mit der Tubuslinse (21) im Tubus (8) nach Figur 1 in Lichtrichtung verschoben.

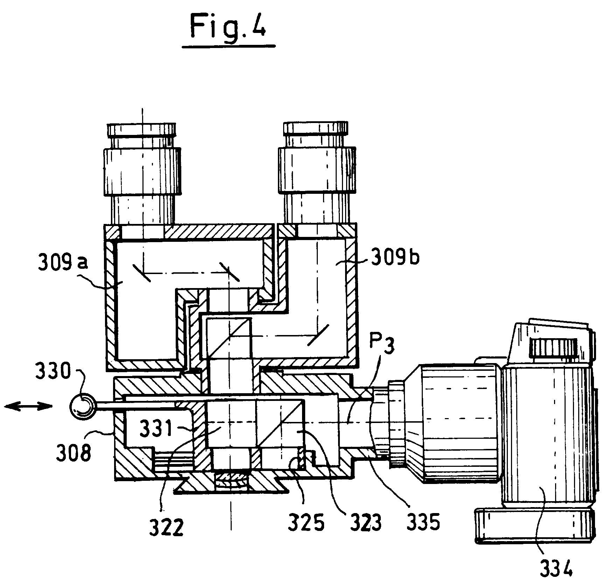

Der Tubus (8) in Figur 1 kann auch gegen den in Figur 4 dargestellten Tubus (308) ausgewechselt werden. In dieser Geräteversion ist zusätzlich zu dem Beobachtungsstrahlengang und dem vertikalen Zusatzstrahlengang noch ein weiterer, horizontaler Zusatzstrahlengang (P3) vorgesehen. Ein vertikaler Schnitt durch diesen Tubus (308) würde dem in Figur 1 dargestellten Tubus (8) entsprechen, so daß auf eine solche Darstellung verzichtet werden kann.

In den Tuben (308) sind jedoch zwei Prismen (322) und (323) als Strahlteiler auf einem gemeinsamen Schieber (325) angeordnet. Dieser Schieber ist über Griff (330) und Schaltstange (331) von außen schaltbar.

In der ersten Schaltstellung, in der das Prisma (322) in den Strahlengang geschaltet ist, wird das Licht in den Binokulartubus (309a, 309b) und in den in Figur 4 nicht dargestellten vertikalen Strahlengang gelenkt. Durch Betätigung der Schaltstange (331) kann anstelle des Prismas (322) das andere Prisma (323) in den Strahlengang geschaltet werden. Es wird dann das Licht in den Binokulartubus (309a, 309b) und in den horizontalen Zusatzstrahlengang (P3) gelnkt. An diesem Bildausgang (P3) ist an einer Schnittstelle (335) ein weiteres Zusatzgerät (334), z.B. eine Kamera, adaptiert.

Vorstehend wurde die Erfindung anhand eines inversen Mikroskops beschrieben. Es ist klar, daß die vorgesehenen Maßnahmen auch in aufrechten Mikroskopen Verwendung finden können, sofern dort der Beobachtungsstrahlengang ebenfalls diagonal nach oben in Richtung auf den Betrachter verläuft.

## Patentansprüche

1. Mikroskop mit einem Gehäuse (1), einem diagonal nach oben zur oberen Frontseite des Gehäuses (1) verlaufenden Beobachtungsstrahlengang (B), einem an das Gehäuse (1) angesetzten Wechseltubus (8; 108; 308), einem dem Wechseltubus nachgeschalteten Binokulartubus (9; 309a, 309b) und einem im Wechseltubus (8; 108; 308) angeordneten Strahlteiler (22; 122; 322), der das vom Objektiv kommende Licht in den Beobachtungsstrahlengang und einen Strahlengang für Zusatzgeräte aufteilt, wobei der Beobachtungsstrahlengang (B) durch den Strahlteiler (22; 122; 322) und den Wechseltubus (8; 308) geradlinig in Richtung auf den Binokulartubus (9; 309a, 309b) hindurchtritt und der Strahlengang (P2) für die Zusatzgeräte (12) durch Reflexion an der Teilerfläche des Strahlteilers (22; 122; 322) und eine weitere Reflexion in die vertikale Richtung umgelenkt ist.

2. Mikroskop nach Anspruch 1, dadurch gekennzeichnet, daß der Wechseltubus (8) die Tubuslinse (21; 121) des Mikroskops enthält.

3. Mikroskop nach Anspruch 1 oder 2, dadurch gekennzeichnet, daß der Wechseltubus (308) zusätzlich einen dritten, horizontalen Bildausgang (P3) aufweist.

4. Mikroskop nach einem der Ansprüche 1-3, dadurch gekennzeichnet, daß das Mikroskopgehäuse (1) inverser Bauart ist.

5. Mikroskop nach Anspruch 1, dadurch gekennzeichnet, daß der Strahlteiler (22) auf einem Schieber (25) bzw. Revolver angeordnet ist, der mindestens zwei Schaltstellungen besitzt, und in einer Schaltstellung des Schiebers (25) bzw. Revolvers alles Licht in den Beobachtungsstrahlengang (B) gelangt.

6. Mikroskop nach Anspruch 1, dadurch gekennzeichnet, daß der Strahlteiler (22) ein Prisma ist und die weitere Reflexion durch innere Totalreflexion an der Lichteintrittsfläche des Prismas (22) erfolgt.

7. Mikroskop nach Anspruch 6, dadurch gekennzeichnet, daß das Prisma (22) aus Glas mit einem Brechungsindex von wenigstens 1,55 besteht.

8. Mikroskop nach Anspruch 1, dadurch gekennzeichnet, daß der Beobachtungsstrahlengang (B) vorzugsweise im Winkel von 45° gegen die Vertikale verläuft.

9. Mikroskop nach Anspruch 2, dadurch gekennzeichnet, daß ein weiterer Wechseltubus (208) vorgesehen ist, der allein eine Tubuslinse (221) enthält und die Tubuslinse in diesem Tubus gegenüber der Tubuslinse (21) im ersten Wechseltubus (8) in Richtung auf den Betrachter versetzt eingebaut ist.

10. Mikroskop nach Anspruch 2, dadurch gekennzeichnet, daß ein weiterer Wechseltubus (308) vorgesehen ist, in dem der Strahlteiler (322) auf einem Schieber (325) bzw. Revolver angeordnet ist, der mindestens zwei Schaltstellungen besitzt, und daß auf dem Schieber (325) bzw. Revolver ein zweiter Strahlteiler (323) angeordnet ist, der in den Strahlengang schaltbar ist und das vom Objektiv kommende Licht in den Beobachtungsstrahlengang und in einen weiteren, horizontalen Strahlengang (P3) für Zusatzgeräte (334) lenkt.

11. Mikroskopsystem, das ein Mikroskopgehäuse (1) inverser Bauart mit einem diagonal nach oben zur oberen Frontseite des Gehäuses (1) verlaufenden Beobachtungsstrahlengang (B) und mindestens zwei wahlweise an das Mikroskopgehäuse (1) ansetzbare Wechseltuben (8; 208; 308, 108) umfaßt, wobei dem Wechseltubus (8; 208; 308, 108) jeweils ein Binokulartubus (9; 309a, 309b) nachgeschaltet ist, wobei der eine Wechseltubus (8; 208; 308) einen Strahlteiler (22; 122; 322) enthält, der das vom Objektiv kommende Licht in den Beobachtungsstrahlengang (B) und einen Strahlengang (P2) für Zusatzgeräte (12) aufteilt, indem der Beobachtungsstrahlengang (B) durch den Strahlteiler (22; 122; 322) und den Wechseltubus (8; 208; 308) geradlinig in Richtung auf den Binokulartubus (9; 309a, 309b) hindurchtritt und der Strahlengang (P2) für die Zusatzgeräte (12) durch Reflexion an der Teilerfläche des Strahlteilers (22; 122; 322) und eine weitere Reflexion in die vertikale Richtung umgelenkt ist, und wobei der mindestens zweite Wechseltubus (208) nur den Ansatz für einen Binokulartubus (9) ohne weitere Bildausgänge enthält.

12. Mikroskopsystem nach Anspruch 9, wobei ein dritter Wechseltubus (308) wahlweise an das Mikroskopgehäuse (1) ansetzbar ist, der zusätzlich zu dem vertikalen Bildausgang (P2) für Zusatzgeräte noch einen weiteren horizontalen Bildausgang (P3) für Zusatzgeräte aufweist.

## Claims

1. Microscope with a housing (1), an observation beam path (B) extending diagonally upward into the direction of the upper front side of the housing (1), an interchangeable tube (8; 108; 308) adapted to the housing (1), a binocular tube (9; 309a, 309b) following the interchangeable tube (8; 108; 308) and a beam splitter (22; 122; 322) arranged within the interchangeable tube (8; 108; 308) for splitting the light coming from the objective lens into the observation beam path and a beam path for accessory apparatus, whereby the observation beam path (B) passes through the beam splitter (22; 122; 322) and the interchangeable tube (8; 308) in a straight line into the direction of the binocular tube (9; 309a, 309b) and whereby the beam path (P2) for accessory apparatus (12) is deflected in vertical direction by reflection at the splitter surface of the beam splitter (22; 122; 322) and an additional reflection.

2. Microscope of claim 1, characterized in that the interchangeable tube (8) comprises the tube lens (21; 121) of the microscope.

3. Microscope of claim 1 or 2, characterized in that the interchangeable tube (308) comprises an additional third image output (P3) in horizontal direction.

4. Microscope of one of the claims 1 to 3, characterized in that the housing (1) is of inverted design.

5. Microscope of claim 1, characterized in that the beam splitter (22) is arranged on a slide (25) or a turret which comprises at least two switching positions and wherein in at least one switching position of the slide (25) or turret all the light enters the observation beam path (B).

6. Microscope of claim 1, characterized in that the beam splitter (22) is a prism and that the additional reflection takes place by inner total reflection at the light entry surface of the prism (22).

7. Microscope of claim 6, characterized in that the prism (22) consists of glass material having an index of refraction of at least 1.55.

8. Microscope of claim 1, characterized in that the observation beam path (B) preferably extends at an angle of 45° relative to the vertical direction.

9. Microscope of claim 2, characterized in that an auxiliary interchangeable tube (208) is provided which contains only one tube lens (221) and that the tube lens in this tube is arranged in an offset position with respect to the tube lens (21) in the first interchangeable tube (8).

10. Microscope of claim 2, characterized in that an auxiliary interchangeable tube (308) is provided, in which the beam splitter (322) is arranged on a slide (325) or turret which has at least two switching positions and that an additional beam splitter (323) is arranged on the slide (325) or turret which can be switched into the beam path and deflects the light coming from the objective lens into the observation beam path and an additional horizontal beam path (P3) for accessory apparatus (334).

11. Microscope system comprising a microscope housing (1) of inverted design with an observation beam path (B) extending diagonally upward into the direction of the upper front side of the housing (1) and at least two interchangeable tubes (8; 208; 308, 108) which optionally can be adapted to the microscope housing (1), whereby a binocular tube (9; 309a, 309b) is set behind the respective interchangeable tube (8; 208; 308, 108), whereby one of the interchangeable tubes (8; 208; 308) comprises a beam splitter (22; 122; 322) which splits the light coming from the objective lens into the observation beam path (B) and a beam path (P2) for auxiliary apparatus (12) in a manner that the observation beam path (B) passes through the beam splitter (22; 222; 322) and the interchangeable tube (8; 208; 308) in a straight line into the direction of the binocular tube (9; 309a, 309b) and the beam path (P2) for the auxiliary apparatus (12) is deflected into the vertical direction by reflection at the splitter surface of the beam splitter (22; 222; 322) and an additional reflection, and whereby the at least second interchangeable tube (208) only comprises the fitting for a binocular tube (9) without further image outputs.

12. Microscope of claim 9, wherein a third interchangeable tube (308) is adaptable to the microscope housing (1) optionally which comprises a further horizontal image output (P3) for accessory apparatus additionally to the vertical image output (P2) for accessory apparatus.

## Revendications

1. Microscope doté d'un boîtier (1), d'un trajet lumineux d'observation (B) orienté diagonalement vers le haut, en direction de la face frontale supérieure dudit boîtier (1), d'un tube interchangeable (8; 108; 308) adapté audit boîtier (1), d'un tube binoculaire (9; 309a; 309b) monté en aval du tube interchangeable et d'un diviseur de faisceau (22; 122; 322) disposé dans ledit tube interchangeable (8; 108; 308) et distribuant la lumière en provenance de l'objectif dans un trajet lumineux d'observation et un trajet lumineux pour équipements additionnels, où le trajet lumineux d'observation (B) traverse le diviseur de faisceau (22; 122; 322) et le tube interchangeable (8; 308) selon une ligne droite en direction du tube binoculaire (9; 309a, 309b) et où le trajet lumineux (P2) pour les équipements additionnels (12) est dévié en direction verticale par une réflexion au niveau de la face séparatrice du diviseur de faisceau (22; 122; 322) et par une réflexion additionnelle.

2. Microscope selon la revendication 1, caractérisé en ce que le tube interchangeable (8) comprend la lentille de tube (21; 121) du microscope.

3. Microscope selon la revendication 1 ou 2, caractérisé en ce que le tube interchangeable (308) présente en plus une troisième sortie optique orientée horizontalement (P3).

4. Microscope selon l'une des revendications 1 à 3, caractérisé en ce que le boîtier de microscope (1) est de type inversé.

5. Microscope selon la revendication 1, caractérisé en ce que le diviseur de faisceau (22) est disposé sur un coulisseau (25) ou sur un revolver ayant au moins deux positions commutables, et que toute la lumière est acheminée par le trajet lumineux d'observation (5) dans l'une de ces positions du coulisseau (25) ou du revolver.

6. Microscope selon la revendication 1, caractérisé en ce que le diviseur de faisceau (22) est un prisme et que la réflexion additionnelle s'opère par réflexion totale intérieure au niveau de la face d'entrée de lumière dudit prisme (22).

7. Microscope selon la revendication 6, caractérisé en ce que le prisme (22) est fabriqué en un type de verre présentant un indice de réfraction d'au moins 1,55.

8. Microscope selon la revendication 1, caractérisé en ce que le trajet lumineux d'observation (B) évolue de préférence selon un angle de 45° par rapport à la verticale.

9. Microscope selon la revendication 2, caractérisé en ce qu'il est prévu un autre tube interchangeable (208) qui porte seulement une lentille de tube (221) et que la lentille de tube contenue dans ce tube est montée avec un décalage en direction de l'observateur comparé à la lentille de tube (21) du premier tube interchangeable (8).

10. Microscope selon la revendication 2, caractérisé en ce qu'il est prévu un autre tube interchangeable (308), dans lequel le diviseur de faisceau (322) est disposé sur un coulisseau (325) ou sur un revolver ayant au moins deux positions commutables et que ledit coulisseau (325) ou ledit revolver porte un deuxième diviseur de faisceau (323) qui peut être intercalé dans le trajet lumineux et qui dirige alors la lumière provenant de l'objectif vers le trajet lumineux d'observation et vers un autre trajet lumineux horizontal (P3) destiné à alimenter des appareils additionnels (334).

11. Système microscopique comprenant un boîtier de microscope (1) de type inversé présentant un trajet lumineux d'observation (B) évoluant diagonalement vers le haut, en direction de la face frontale supérieure dudit boîtier, ainsi qu'au moins deux tubes interchangeables (8; 208; 308; 108) adaptables au choix au boîtier de microscope (1), où un tube binoculaire (9; 309a; 309b) est monté respectivement en aval du tube interchangeable (8; 208; 308; 108), où l'un des tubes interchangeables (8; 208; 308) porte un diviseur de faisceau (22; 122; 322) qui répartit la lumière en provenance de l'objectif sur un trajet lumineux d'observation (B) et un trajet lumineux (P2) pour appareils additionnels (12), le trajet lumineux d'observation (B) traversant le diviseur de faisceau (22, 122; 322) et le tube interchangeable (8; 208; 308) selon une ligne droite en direction du tube binoculaire (9; 309a; 309b) et le trajet lumineux (P2) pour appareils additionnels (12) étant orienté à la verticale par réflexion sur la face séparatrice du diviseur de faisceau (22; 122; 322) et par une réflexion additionnelle, et où le ou les autres tubes interchangeables (208) ne portent qu'un raccord prévu pour un tube binoculaire (9), sans autres sorties optiques.

12. Système microscopique selon la revendication 9, où un troisième tube interchangeable (308) présentant une autre sortie optique horizontale (P3) pour équipements additionnels en complément à la sortie optique verticale (P2) pour appareils additionnels est adaptable au choix au boîtier de microscope (1).
